## Europäisches Patentamt

## European Patent Office

## Office européen des brevets

(19)

(11) Veröffentlichungsnummer: **0 027 849**
**A1**

(12) # EUROPÄISCHE PATENTANMELDUNG

(21) Anmeldenummer: **80103679.9**

(22) Anmeldetag: **28.06.80**

(51) Int. Cl.³: **C 21 B 3/04, C 22 B 7/04**

(30) Priorität: **27.10.79 DE 2943465**

(43) Veröffentlichungstag der Anmeldung: **06.05.81**
**Patentblatt 81/18**

(84) Benannte Vertragsstaaten: **AT BE CH FR GB IT LI LU NL SE**

(71) Anmelder: **Fried.Krupp Hüttenwerke AG, D-4630 Bochum (DE)**

(72) Erfinder: **Fiege, Ludwig, Dipl.-Ing., Andreasstrasse 28, D-4130 Moers 1 (DE)**
Erfinder: **Höhle, Hans-Werner, Dr.-Ing., Ostring 6, D-4130 Moers 1 (DE)**
Erfinder: **Kayser, Walther, Dr.-Ing., Bachstrasse 14, D-4100 Duisburg 14 (DE)**
Erfinder: **Lackmann, Heinz Helmut, Dr.-Ing., Ackerstrasse 28, D-4100 Duisburg 14 (DE)**

(74) Vertreter: **Patentanwaltsbüro Cohausz & Florack, Postfach 14 01 47, D-4000 Düsseldorf 1 (DE)**

(54) **Verfahren zur Schlackekonditionierung.**

(57) Die Erfindung bezieht sich auf ein Verfahren, um die bei bestimmten Schritten der Stahlerzeugung, z. B. beim Entschwefeln, in festem Zustand mit hohem Staubanteil anfallende Schlacke, die zur Verhinderung von Staubemission mit Wasser befeuchtet wird, schneller wieder in den metallurgischen Prozeß einsetzbar zu machen. Die erfindungsgemäße Lösung besteht darin, die befeuchtete Schlacke mit trockenen feinstückigen Einsatzstoffen für die Stahlherstellung zu mischen. Dabei soll vorzugsweise das Mischen durch lageweises Schichten oder Aufschütten der befeuchteten Schlacke und der trockenen Einsatzstoffe erfolgen. Als trockene feinstückige Einsatzstoffe kommen Hüttenreststoffe, insbesondere Konverterschlacke in Betracht. Die trockenen Einsatzstoffe nehmen einen Teil der Feuchtigkeit der befeuchteten Schlacke auf, wodurch die Trocknungszeit der Schlacke erheblich verringert wird.

- 1 -

Verfahren zur Schlackekonditionierung

Die Erfindung betrifft ein Verfahren, um die bei bestimmten
Schritten der Stahlerzeugung, z.B. beim Entschwefeln, in
festem Zustand mit hohem Staubanteil anfallende Schlacke,
die zur Verhinderung von Staubemission mit Wasser befeuchtet wird, schneller wieder in den metallurgischen Prozeß
einsetzbar zu machen.

Bekanntlich fällt bei der Stahlerzeugung, insbesondere beim
Entschwefeln von Stahl oder Roheisen, in größeren Mengen
Schlacke an, die mit einem hohen Staubanteil behaftet ist.
Beim Abkippen dieser Schlacke auf Lagerplätzen entsteht eine
hohe Umweltbelastung durch aufgewirbelten Staub. Um diese
Staubemission zu unterdrücken besprengt man auf Befeuchtungsplätzen die Schlacke mit Wasser. Bevor die befeuchtete
Schlacke wieder verwendet werden kann - Schlacken mit hohem
Metallanteil werden in den metallurgischen Prozeß zurückgeführt (Recycling) - muß die Schlacke auf eigens dafür eingerichteten Lagerplätzen trocknen. Dieser Trocknungsprozeß
kann je nach Wetterlage erhebliche Zeit in Anspruch nehmen,
so daß eine verhältnismäßig große Lagerfläche für die
trocknende Schlacke benötigt wird.

- 2 -

Die der Erfindung zugrundeliegende Aufgabe besteht nun darin, eine Maßnahme anzugeben, durch die die Trocknungszeit verringert und dadurch Lagerfläche eingespart werden kann.

Zur Lösung dieser Aufgabe wird erfindungsgemäß vorgeschlagen, die befeuchtete Schlacke mit trockenen feinstückigen Einsatzstoffen für die Stahlherstellung zu mischen. Dabei soll vorzugsweise das Mischen durch lageweises Schichten oder Aufschütten der befeuchteten Schlacke und der trockenen Einsatzstoffe erfolgen. Als trockene feinstückige Einsatzstoffe kommen Hüttenreststoffe, insbesondere Konverterschlacke in Betracht. Das Mischungsverhältnis Schlacke : Einsatzstoffe sollte vorteilhafter weise etwa 50 : 50 sein.

Die trockenen Einsatzstoffe nehmen einen Teil der Feuchtigkeit der befeuchteten Schlacke auf, wodurch die Trocknungszeit der Schlacke erheblich verringert wird. Es ist dabei nicht erforderlich, daß die Schlacke vollständig trocknet, weil zum Pelletieren des feinkörnigen Anteils der Schlacke ein gewisser Restfeuchtegehalt wünschenswert ist.

Bereits nach einigen Tagen kann das inzwischen ausreichend getrocknete Schlacke-Einsatzstoffgemisch in die Kornfraktionen 0 bis 10 mm, 10 bis 60 mm und 60 bis 300 mm abgesiebt werden. Der Feinkornanteil, der etwa die Hälfte des Gemischs ausmacht, kommt über eine Sinteranlage zum Wiedereinsatz. Die mittlere Kornfraktion mit einem Anteil von etwa 45% wird zur Hochofen-Möllerung geschickt, und der Grobkornanteil mit etwa 5% kann direkt im Stahlwerk eingesetzt werden.

Eine typische Zusammensetzung von bei der Entschwefelung von
Roheisen anfallender Schlacke besteht aus

ca. 60% Fe

ca. 20% CaO

ca. 8% $SiO_2$

ca. 6% C

ca. 1% S

Rest andere Stoffe.

Die nachfolgende Tabelle gibt eine Übersicht über die Bestandteile der durch Mischen einer Entschwefelungsschlacke der
vorgenannten Zusammensetzung mit Konverterschlacke nach
dem erfindungsgemäßen Verfahren in kürzerer Zeit wieder verwendbar gemachten Schlacke:

## Tabelle

| Fraktionen | Mengenanteile in % | | | | | | | |
|---|---|---|---|---|---|---|---|---|
| | Fe ges. | CaO | $SiO_2$ | MgO | S ges. | C | $H_2O$ | Summe |
| 0 - 10 mm | 45,1 | 28,0 | 9,6 | 2,3 | 0,5 | 5,1 | 6,7 | 97,3 |
| 10 - 60 mm | 48,1 | 25,9 | 10,6 | 1,5 | 0,6 | 5,3 | 2,5 | 94,5 |

- 4 -

Ansprüche:

1. Verfahren, um die bei bestimmten Schritten der Stahlerzeugung, z.B. beim Entschwefeln, in festem Zustand mit hohem Staubanteil anfallende Schlacke, die zur Verhinderung von Staubemission mit Wasser befeuchtet wird, schneller wieder in den metallurgischen Prozeß einsetzbar zu machen, d a d u r c h   g e k e n n - z e i c h n e t ,   daß die befeuchtete Schlacke mit trockenen feinstückigen Einsatzstoffen für die Stahlherstellung gemischt wird.

2. Verfahren nach Anspruch 1, d a d u r c h   g e - k e n n z e i c h n e t ,   daß das Mischen durch lageweises Schichten oder Aufschütten der befeuchteten Schlacke und der trockenen Einsatzstoffe erfolgt.

3. Verfahren nach einem der Ansprüche 1 oder 2, d a - d u r c h   g e k e n n z e i c h n e t ,   daß als trockene feinstückige Einsatzstoffe Hüttenreststoffe verwendet werden.

4. Verfahren nach Anspruch 3, d a d u r c h   g e k e n n - z e i c h n e t ,   daß als Hüttenreststoffe Konverterschlacke verwendet wird.

5. Verfahren nach einem der Ansprüche 1 bis 4, d a d u r c h   g e k e n n z e i c h n e t ,   daß die befeuchtete Schlacke und die Einsatzstoffe im Verhältnis von etwa 50 : 50 gemischt werden.

# EUROPÄISCHER RECHERCHENBERICHT

**0027849**
Nummer der Anmeldung

Europäisches
Patentamt

EP 80 10 3679.9

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE -C - 1 170 852 (F. FORSCHEPIEPE) <br> * Spalte 4 * <br> -- | 1 |
| | DE - B - 1 015 605 (METALLGESELLSCHAFT) <br> * Spalte 3 * <br> -- | 1 |
| | DE - A - 2 002 654 (VOEST) <br> * Seite 3 * <br> -- | 1 |
| | US - A - 3 320 052 (J.J. BOWDEN) <br> * Spalte 6 * <br> -- | 1 |
| P | Patents Abstracts of Japan <br> Band 4, Nr. 89, 25. Juni 1980 <br> Seite 150C16 <br> & JP - A - 55 - 54529 <br> ---- | 1 |

**KLASSIFIKATION DER ANMELDUNG (Int. Cl.³)**

C 21 B  3/04
C 22 B  7/04

**RECHERCHIERTE SACHGEBIETE (Int. Cl.³)**

C 21 B  3/04
C 22 B  7/04

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X | Der vorliegende Recherchenbericht wurde für alle Patentansprüche erstellt.

| Recherchenort | Abschlußdatum der Recherche | Prüfer |
|---|---|---|
| Berlin | 30-01-1981 | SUTOR |

EPA form 1503.1  06.78